# EUROPEAN PATENT APPLICATION

(11) **EP 1 672 583 A1**
(43) Date of publication of application: **21.06.2006**
(21) Application number: 04447280.1
(22) Date of filing: 17.12.2004
(51) Int. Cl.: G06T 7/00, G06T 7/20, G01S 17/89

(54) **Laser tracking method and device**

(71) Applicant: Metris N.V., 3001 Leuven (BE)
(72) Inventor: Van Coppenolle, Bart, 3210 Linden (BE); De jonge, Lieven, 3090 Overijse (BE)
(74) Representative: Brants, Johan P.E.

(57) **Abstract**

The present invention relates to a method for tracking the position and/or orientation of an object to be tracked (OT) by (a) obtaining a 3D map comprising at least one artefact using a laser radar, (b) determining from said map of the position and orientation of each artefact, (c) repeating steps (a) and (b), and (d) determining from consecutively determined values in step (b) the position and/or orientation the OT.

## Description

### BACKGROUND TO THE INVENTION

A laser tracking device tracks accurately the movement of an object by use of a reflector attached to the object and measuring laser light reflected thereof. The tracking device measures the azimuth and elevation of the reflector by rotary encoders of the laser pointing unit in which the laser is mounted. The range (distance) between the tracking device and reflector is measured by interferometry, that is, by determining from the change in (Doppler shifted) frequency of the returning light, the amount by which the reflector has moved.

The problem with laser tracker devices of the art is that a reflector must be attached to the moving object. The object may be damaged because the reflector must be securely affixed. Furthermore, a laser tracker cannot measure the orientation of the reflector. This is important, for example, when the movement of the part in question has rotation and displacement components. Furthermore, the environment must be relatively clean so that the reflector does not become tainted. In outdoor applications, for example, maintaining a clean reflector is not always possible.

There is a need for a new method for tracking an object which overcomes the problems of the prior art.

### SUMMARY OF THE INVENTION

One embodiment of the invention is a method for tracking the position and/or orientation of an object comprising:
(a) obtaining 3D map comprising at least one artefact using a laser radar,
(b) determining from said map, the position and orientation of each artefact,
(c) repeating steps (a) and (b), and
(d) determining from sequentially determined values in step (b) the positions and/or orientations of the tracked object.

Another embodiment of the invention is a method as described above, wherein each artefact is representable by a mathematical model.

Another embodiment of the invention is a method as described above, wherein said model is a mathematical formula or look up table.

Another embodiment of the invention is a method as described above, wherein step (b) is performed by fitting said mathematical model to at least part of said 3D map.

Another embodiment of the invention is a method as described above, wherein position of the scanning volume used to obtain the 3D map is constant during the movement of said artefact.

Another embodiment of the invention is a method as described above, wherein the scanning volume used to obtain the 3D map is adjusted to encompass each artefact as or after said artefact moves.

Another embodiment of the invention is a method as described above, wherein said adjustment is to the size of the scanning volume.

Another embodiment of the invention is a method as described above, wherein said adjustment is to the position of the scanning volume.

Another embodiment of the invention is a method as described above, wherein the position of each scanning volume is further adjusted to encompass sequentially each artefact, when two or more artefacts are used.

Another embodiment of the invention is a method as described above, wherein said position is partly predicted using one or more previously acquired 3D maps.

Another embodiment of the invention is a method as described above, wherein at least one artefact is inherently part of the object.

Another embodiment of the invention is a method as described above, comprising the step of attaching at least one artefact to the object.

Another embodiment of the invention is a method as described above, wherein at least one artefact is a sphere.

Another embodiment of the invention is a method as described above, wherein at least one artefact is three or more spheres when orientation of the artefact is tracked.

Another embodiment of the invention is a method as described above, wherein at least one artefact is a cube.

Another embodiment of the invention is a method as described above, wherein at least one artefact is three or more cubes when orientation of the artefact is tracked.

Another embodiment of the invention is a method as described above, wherein at least one artefact is a part of an artefact.

Another embodiment of the invention a laser radar configured to perform a method as described above.

Another embodiment of the invention a computer program stored on a computer readable medium comprising computer code suitable for configuring a laser radar to perform a method as described above.

Another embodiment of the invention a use of a laser radar for tracking the position and/or orientation of an object.

Another embodiment of the invention a use as described above, comprising:
(a) obtaining 3D map comprising at least one artefact using said laser radar,
(b) determining from said map, the position and orientation of each artefact,
(c) repeating steps (a) and (b), and
(d) determining from sequentially determined values in step (b) the positions and/or orientations of the tracked object.

Another embodiment of the invention a use as described above, comprising one or more features of any of the embodiments above.

### BRIEF DESCRIPTION OF THE FIGURES

Figure 1: Laser radar capturing data from a moving object using wide scanning volume.
Figure 2: Laser radar capturing data from a moving object using narrow scanning volume. Figure 3: Consecutive scans of a moving object using wide scanning volume.
Figure 4: Consecutive scans of a moving object using narrow scanning volume, and adjustment of the position of the scanning volume.
Figure 5: Fitting a mathematical model of the artefact to a series of 3D maps recorded according to Figure 3.
Figure 6: Fitting a mathematical model of the artefact to a series of 3D maps recorded according to Figure 4.

### DETAILED DESCRIPTION OF THE INVENTION

The present invention relates to a method for tracking the position and/or orientation of an object to be tracked (OT) by (a) obtaining a 3D map comprising at least one artefact using a laser radar, (b) determining from said map of the position and orientation of each artefact, (c) repeating steps (a) and (b), and (d) determining from consecutively determined values in step (b) the position and/or orientation the OT.

### Artefact

An artefact is any part of the OT which can be defined by a numerical model. The artefact can be modelled by using a mathematical function or by using a look-up table. The artefact can be a part of an artefact. The artefact can be a regular shape, such as, for example, a cube, sphere, torus, pyramid, cylinder, cone, brick, dumbell etc of part thereof. Such regular shapes are readily definable using mathematical formulae. An artefact may also be an irregular shape, such as, for example, a wheel hub, a bolt head, a car door handle, a combination of three or more spheres, a combination of three of more cubes etc of part thereof. Such shapes could also be defined by a mathematical formula, or more readily defined using look-up tables. An artefact may be inherently part of the OT, for example, an exhaust pipe on a motorbike. Alternatively, a defined artefact may be attached to the OT. In which case the artefact may be, for example, an cube, a sphere, etc of part thereof.

Where part of an artefact is used or captured in the 3D map, said part is preferably distinct to enable, from a 3D map thereof, an extrapolation to the complete artefact. Said part might be, for example, a corner of a cube, an edge of a sphere, a point of a cone etc.

Two or more artefacts may be used to track the movement at two or more different positions of a object. For example, an operator might want to monitor the movement of an aircraft wing at its tip and base simultaneously. Where two or more artefacts are used, the artefacts may be the same (e.g. two identical cubes) or different (e.g. two spheres of different sizes, a sphere and a cube). Different artefacts may be used when the paths of movement of said artefacts might be anticipated to cross from the point of view of the laser radar.

### Laser radar

Laser radars are devices for measuring the position of a point on an object by measuring properties of laser light reflected therefrom. Such devices and methods therefor are well known to the skilled person. Three main types of laser radars are generally known in the art:

### - Time of flight (TOF)

In TOF, a pulsing laser source is pointed at the target at a gated counter measures the time between sending a light pulse and receiving it. The distance from the laser and the object is calculated from the TOF.

### - Amplitude modulated (AM)

The amplitude (intensity) of the laser source is modulated. The phase shift in the returning beam is detected by synchronous detection. Multiple tone sinusoidal modulation may be also be employed.

### - Frequency modulated (FM) or coherent

The frequency of the laser source is modulated, and the reflected beam is detected using coherent detection. Typically, the frequency is modulated using a sawtooth or triangle wave, resulting in linear modulation. Such modulation is often referred to as a chirp.

The present invention encompasses these and other types of laser radar systems.

By measuring several points of an object, range information together with azimuth and elevation data of the pointing unit may be used to determine a three-dimensional (3D) co-ordinate for the point. By measuring multiple points of an object, a 3D map of the object can be obtained. A radar system according to the present invention is configured to obtain a three-dimensional map comprising one or more artefacts, by systematically scanning the laser across the OT (i.e. making a scan) and determining from the combination of range, azimuth and elevation, a 3D map. Methods for creating a 3D map or point cloud using a laser radar are known in the art, for example from US 6,734,849 B2 which is incorporated herein by reference. A 3D map of comprising an artefact may comprise the whole artefact, or a part of the artefact. Where part of an artefact is captured, the part may that available to the point of point of the laser radar. As mentioned above a where part of an artefact is captured in the 3D map, said part is preferably distinct to enable, from a 3D map thereof, an extrapolation to the complete artefact.

Once a 3D map has been obtained comprising one or more artefacts, a method of the present invention compares said map with each artefact as represented by the respective numerical models. Best-fit procedures are used to find the position of each model within the 3D map. Thus, from the knowledge of the numerical model of an artefact, and by fitting the model to the 3D map, the position and orientation of an artefact within the 3D map can be determined. The position of a model can be calculated as any point relative to the model, e.g. as the centre of the model, the centre of the exposed surface, or any desired point within the volume or surface of the model. When two or more artefacts are used, the method fits the model of each artefact to the 3D map, so obtaining the position and orientation of each artefact within the 3D map.

The use of a best-fit procedure provides several advantages - the precision and accuracy with which an artefact is scanned can be lower compared with non-fitting methods. Inaccuracies can be corrected, because a model is fitted using algorithms designed to identify the model in the 3D map from a high noise background if necessary. Because the quality of the 3D maps is not required to be high, the 3D maps can be acquired quickly. Thus, the method may be suitable for faster moving OTs. Where high accuracy and precision tracking is required, the best-fit procedure also provide better results compared with non-fitting methods because inaccuracies, present even at high-resolution, can be averaged out or corrected.

Where an artefact has an asymmetrical shape, the fitting procedure permits the orientation of the artefact to be determined. This is particularly suitable where the movement has a rotational as well as translational component.

Procedures for fitting single models, multiple models, multiple models in which at least two are different (e.g. cube and sphere) or multiple models in which at least two are the same (e.g. two identical cubes) to a 3D map are known in the art. Examples of fitting procedures include least-squares and Tchebychev.

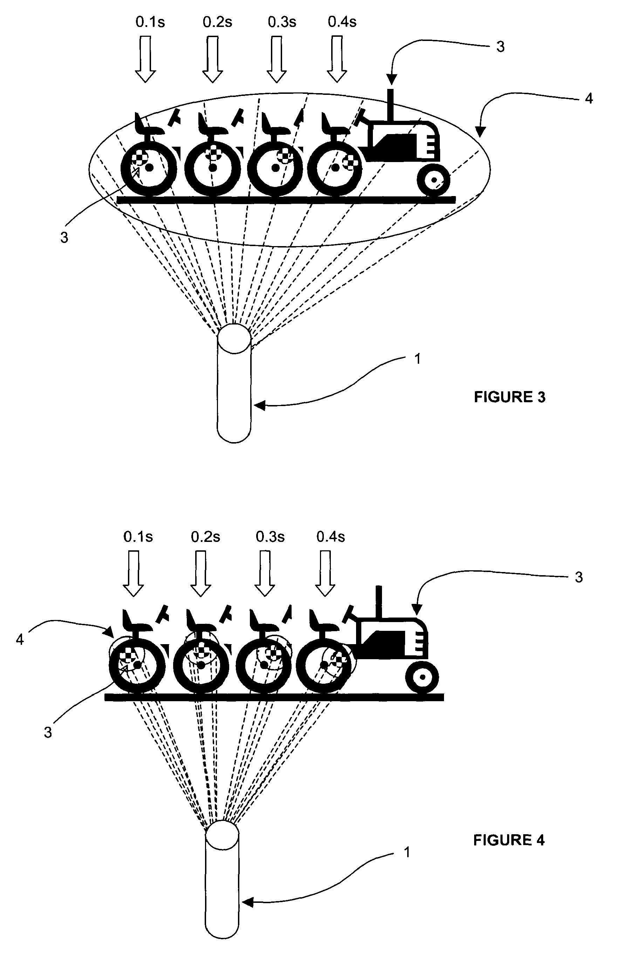

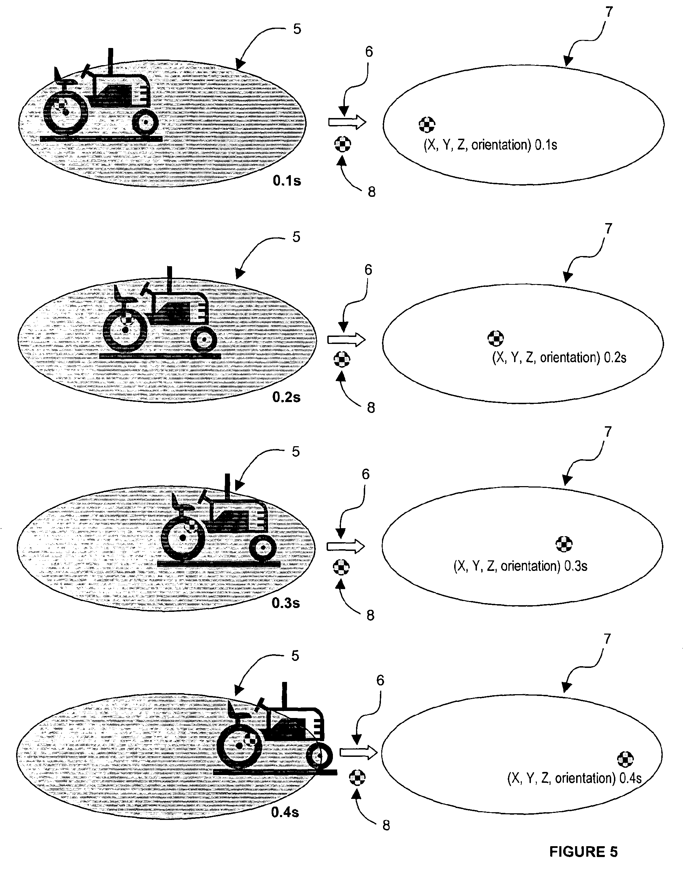

The position of an artefact changes as the OT moves. Where two or more consecutive scans are recorded without changing the position of the scanning volume (SV), the movement of each artefact can tracked across the 3D map obtained at a constant SV position (see, for example, Figures 3 and 5).

The scanning volume (SV) refers to the space in which range, azimuth and elevation measurements are captured and converted to a 3D map. The scanning volume can be set by the operator. For example, the SV may be focused on a portion of an object e.g. a portion that comprises one or more moving artefacts. The scanning volume does not refer to the total volume that is capable of being scanned by a laser scanner projecting from one location; the SV can be a portion of such total volume. Such total scanning volume (TSV) is not normally adjusted between acquiring scans i.e. the physical location from which the scanner projects is normally fixed through the entire operation. However, it is also within the scope of the invention that the TSV can change position during or between acquiring scans. For example, a laser radar may be attached to a localiser or other means which the changes in position of the TSV by a known amount.

The movement of an artefact may be calculated by fitting the mathematical model of the artefact to the 3D map obtained from each scan. The new positions of an artefact obtained after each scan can be used to determine the movement of each artefact.

According to one aspect of the invention, a method comprises the step of scanning at least one artefact using a laser radar to obtain a 3D map comprising the artefact. According to another aspect of the invention, a method comprises the step of best-fitting a mathematical model of each artefact to said 3D map to determine the position of said artefact. According to another aspect of the invention, a method comprises the step of tracking the position of each artefact across two or more consecutively recorded 3D maps.

The size of the SV may depend on the anticipated range of movement of the OT and the accuracy of the required measurement. The position of the scanning volume may remain constant so that the movement is captured without the need to change the position of the scanning volume (e.g. Figure 3). The laser radar may also be configured to adjust the position of the scanning volume to follow the movement (e.g. Figure 4) of an artefact. In such circumstances, the SV may be relatively small, and may just encompasses an artefact. Where two or more artefacts are tracked in such a manner, the position of the SV may adjust sequentially so as to focus on each artefact, one at a time. The SV of each artefact may overlap or may not overlap, depending on the locations and movements of each artefact.

According to one embodiment of the invention, the movement of each artefact may be predicted, based on tracking the movements of the artefact determined from one or more previously acquired 3D maps. Such prediction may be calculated in "real time" or near real-time, enabling the laser radar to adjust the position of the SV so that each artefact is followed and scanned effectively in real time.

According to another embodiment of the invention, the position of the SV adjusted in "real time" to maintain each artefact within the SV as the artefact moves. The adjustment of the position of the SV may be achieved by calculating the centre of the artefact (for example) after each acquisition, and adjusting the SV accordingly. If the movement of the artefact is so great that only part thereof is captured, the invention may still fit the 3D map of the captured part to the model, and extrapolate from the map, the centre of the artefact or other point of the artefact. Where two or more artefacts are tracked in such a manner, the extrapolation is performed on each model sequentially as required.

Alternatively, or in addition, if the movement of an artefact is so great that it cannot be located or only part thereof is captured, the method may widen the SV in order to locate the artefact, and subsequently narrow the SV to record accurately the position of the artefact. Where two or more artefacts are tracked, the SV may be sequentially widened and narrowed for the capture of each artefact as necessary.

According to one aspect of the invention, a method comprises the step of moving the SV to follow movement of at least one artefact. According to another embodiment of the invention, movement is predicted by comparing the movement of each artefact in one or more previous 3D maps. According to another embodiment of the invention, the position of the SV is adjusted to maintain each artefact at the centre of or within the SV.

One embodiment of the invention is a laser radar, configured to perform a method of the invention as described above.

Another embodiment of the invention is a computer program stored on a computer readable medium capable of configuring a laser radar to performing the steps of the invention as described above.

Another embodiment of the invention is a use of a laser radar for performing a method of the invention as described above.

The invention thus provides method for tracking an object without using a reflector. Such method overcomes the need to affix a reflector. Furthermore, it provides a means to track the orientation of an object.

### DETAILED DESCRIPTION OF THE FIGURES

The invention is illustrated by the following figures. They are intended to provide examples of embodiments of the invention, and do not limit in any way the scope of the invention.

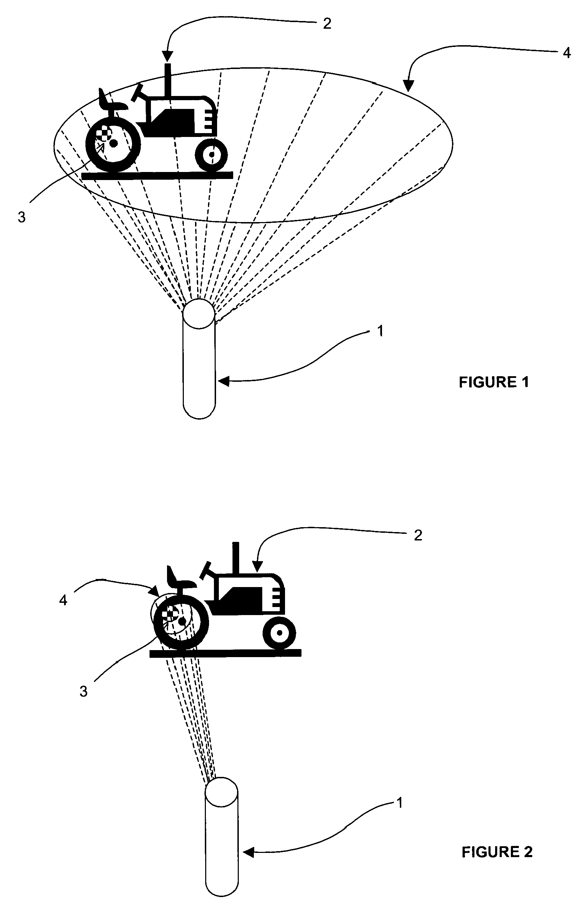

Figure 1: Shows a laser radar (1) set to capture data from a moving vehicle (2). The scanning volume (4) is sufficiently wide to create 3D maps of the anticipated range of movement of the vehicle (2) without changing the position of the scanning volume (4). A single artefact (3), which in this case is a three spheres is attached to the object to be tracked.

Figure 2: Shows a laser radar (1) set to capture data from a moving vehicle (2). The scanning volume (4) is comparatively focussed so as to create 3D maps of essentially the artefact (3). In this Figure, the position of the scanning volume would need to follow the movement of the single artefact in order maintain data of the position of the artefact.

Figure 3: Shows the movement of the vehicle (3) at periods of 0.1 s, 0.2s, 0.3s, and 0.4s. A scan which SV (4) encompasses the anticipated range of movement is taken at each time indicated by the arrow (*i*.*e*. at 0.1s, 0.2s, 0.3s, and 0.4s). A 3D map is created from each scan and the model of the single artefact is fitted thereto. The position and orientation of the model in each of the four scans permits calculation of position and orientation of the OT.

Figure 4: Shows the movement of the vehicle (3) at periods of 0.1s, 0.2s, 0.3s, and 0.4s. A scan which SV (4) covers essentially the artefact is taken at each time indicated by the arrow (i.e. at 0.1s, 0.2s, 0.3s, and 0.4s). The position of the SV is adjusted after each scan to follow the movement of the artefact (3). A 3D map is created from each scan and the model of the single artefact is fitted thereto. The position and orientation of the model in each of the four scans permits calculation of position and orientation of the OT.

**Figure 5:** shows a series of 3D maps (5) acquired at 0.1s, 0.2s, 0.3s and 0.4s recorded according to the example shown in Figure 3. The volume measured by each map is indicated in grey. A mathematical model (8) of the artefact is fitted to each map using a best-fit protocol (6) which results in the position (X, Y and Z) and orientation of the model at each time point (7). Other features (e.g. other vehicle parts) are essentially "filtered out" (7).

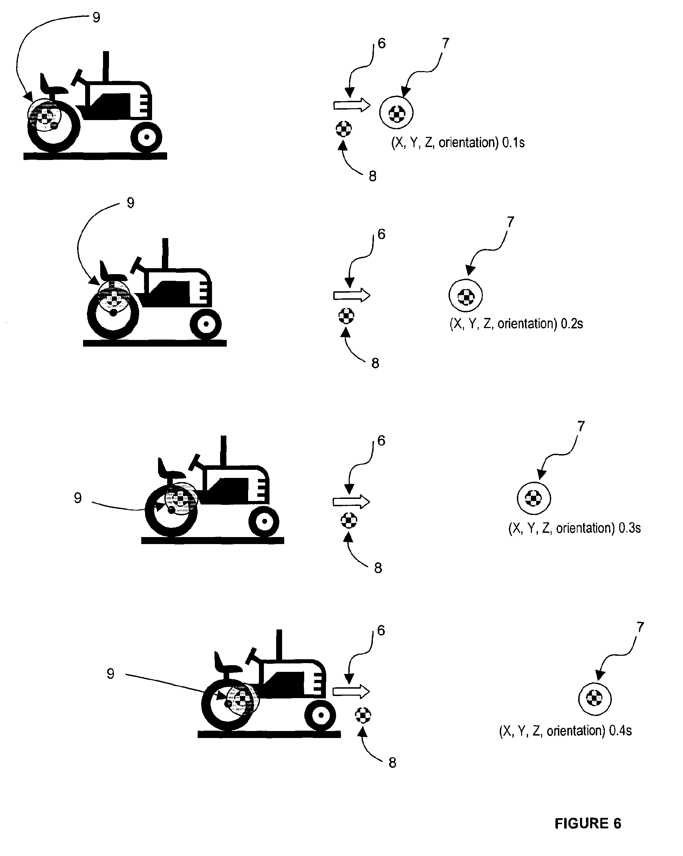

Figure 6: shows a series of 3D maps (9) acquired at 0.1s, 0.2s, 0.3s and 0.4s recorded according to the example shown in Figure 4. The volume acquired by each map is indicated in grey. A mathematical model (8) is fitted to each map using a best-fit protocol (6). From the knowledge of the position of the SV and the position (X, Y and Z) and orientation of the model at each time point (7) within each map (9), the global position (X, Y and Z) and orientation of the model can be calculated. Other features (e.g. other vehicle parts) are either not scanned or essentially "filtered out".

The Figures above explain the principle of the invention as applied to a moving vehicle. However, the invention may be used to track any moving object and any size of displacement. A common application of the invention, not shown in the figures, is to track small displacements (e.g. 10mm) of components which are being moved into position for assembly (e.g. the movement of a wing towards a plane body for joining or welding) in which the movement is done in a step wise manner. Such applications are within the scope of the invention.

## Claims

1. Method for tracking the position and/or orientation of an object comprising:
(a) obtaining 3D map comprising at least one artefact using a laser radar,
(b) determining from said map, the position and orientation of each artefact,
(c) repeating steps (a) and (b), and
(d) determining from sequentially determined values in step (b) the positions and/or orientations of the tracked object.

2. Method according to claim 1, wherein each artefact is representable by a mathematical model.

3. Method according to claim 2, wherein said model is a mathematical formula or look up table.

4. Method according to claims 2 or 3 wherein step (b) is performed by fitting said mathematical model to at least part of said 3D map.

5. Method according to any of claims 1 to 4, wherein position of the scanning volume used to obtain the 3D map is constant during the movement of said artefact.

6. Method according to claim 1 to 4, wherein the scanning volume used to obtain the 3D map is adjusted to encompass each artefact as or after said artefact moves.

7. Method according to claim 6, wherein said adjustment is to the size of the scanning volume.

8. Method according to claims 6 or 7, wherein said adjustment is to the position of the scanning volume.

9. Method according to any of claims 6 to 8, wherein the position of each scanning volume is further adjusted to encompass sequentially each artefact, when two or more artefacts are used.

10. Method according to claims 8 or 9, wherein said position is partly predicted using one or more previously acquired 3D maps.

11. Method according to any of claim 1 to 10, wherein at least one artefact is inherently part of the object.

12. Method according to any of claim 1 to 11, comprising the step of attaching at least one artefact to the object.

13. Method according to any of claims 1 to 12, wherein at least one artefact is a sphere.

14. Method according to any of claims 1 to 13, wherein at least one artefact is three or more spheres when orientation of the artefact is tracked.

15. Method according to any of claims 1 to 14, wherein at least one artefact is a cube.

16. Method according to any of claims 1 to 15, wherein at least one artefact is three or more cubes when orientation of the artefact is tracked.

17. Method according to any of claims 1 to 15, wherein at least one artefact is a part of an artefact.

18. A laser radar configured to perform a method according to any of claims 1 to 17.

19. A computer program stored on a computer readable medium comprising computer code suitable for configuring a laser radar to perform a method according to any of claims 1 to 18.

20. Use of a laser radar for tracking the position and/or orientation of an object.

21. Use according to claim 20, comprising:
(a) obtaining 3D map comprising at least one artefact using said laser radar,
(b) determining from said map, the position and orientation of each artefact,
(c) repeating steps (a) and (b), and
(d) determining from sequentially determined values in step (b) the positions and/or orientations of the tracked object.

22. Use according to claims 20 or 21, comprising one or more features of any of claims 2 to 17.
